# EUROPEAN PATENT SPECIFICATION

(11) **EP 2 195 390 B1**
(45) Date of publication and mention of the grant of the patent: **06.08.2014**
(21) Application number: 08806250.0
(22) Date of filing: 11.09.2008
(51) Int. Cl.: C09D 5/00

(54) **GAS BARRIER COATINGS BASED ON POLYMER EMULSIONS**
GASBARRIEREBESCHICHTUNGEN AUF BASIS VON POLYMEREMULSIONEN
REVÊTEMENTS À BASE D'ÉMULSIONS POLYMÈRES FORMANT UNE BARRIÈRE CONTRE LES GAZ

(30) Priority: 11.09.2007 GB 0717694
(43) Date of publication of application: 16.06.2010
(73) Proprietor: Sun Chemical B.V., 1382 LV Weesp (NL)
(72) Inventor: ILLSLEY, Derek, Ronald, Sevenoaks, Kent TN14 5RB (GB); LEONARD, Michael, William, Tonbridge, Kent TN 12 8NL (GB); MITTAL, Vikas, Orpington, Kent BR6 0UQ (GB)
(74) Representative: Nieuwenhuys, William Francis
(86) International application number: PCT/GB2008/003091
(87) International publication number: WO 2009/034333

(56) References cited:
- WO-A-00/37560
- WO-A-00/47628
- WO-A-01/44383
- WO-A-01/44392
- WO-A-01/46319
- WO-A-02/24759
- WO-A-02/089862
- GB-A- 1 151 531
- GB-A- 2 368 302
- GB-A- 2 376 905
- US-A- 4 737 525
- US-A1- 2004 109 853

## Description

The present invention relates to gas barrier coatings, having, in particular, the ability to block the passage of oxygen, and which may be used to coat and impart gas barrier properties to a variety of materials, notably packaging for foods and pharmaceuticals, where exposure to oxygen needs to be eliminated or restricted.

Synthetic plastics materials have long been used for the packaging of foods and other materials which need protection from handling and from moisture. However, in recent years, it has become appreciated that, in addition, many foods and other sensitive materials benefit from being protected from atmospheric oxygen. A wide variety of rigid and flexible multilayer laminate structures has been developed to provide barrier properties and other performance characteristics suited to a pack's purpose. These laminates may be any combination of plastic, metal or cellulosic substrates, and may include one or more coating or adhesive layers. Laminates which include polymeric films having metals or inorganic compounds, such as silicon oxides, deposited thereon have been found to give good general barrier properties and are widely used. However, they may lose their ability to prevent the ingress of oxygen altogether at high temperatures, for example when the packaged material is retorted in order to sterilise and/or cook it. Moreover, the inorganic layer of these types of laminate is rather brittle and may crack or break when the laminate is flexed, resulting in a loss of the gas barrier properties. A further disadvantage of metallised films is that they are opaque and do not let the customer see the contents of the package.

The principal prior art describing the production of oxygen barrier coatings using metal silicates explains how pure metal silicate coatings are applied onto substrates coated first with a primer layer to acquire adhesion of the silicate. For example, JP 2006159801 A2 reports that BOPP (biaxially oriented polypropylene) films were coated with a polyethyleneimine based primer which was over-coated with lithium silicate solution coating. Oxygen permeability of 11 cc/m²·day at 23°C at 90% RH was reported.

US 6649235 B2 reports a similar process by coextruding polypropylene and polypropylene modified with maleic anhydride followed by corona treatment of the maleated side and over-coating this surface with a barrier layer of polysilicates. In WO 9747678 A1, BOPP was primed with PVA (polyvinyl alcohol) and EVOH (ethylenevinyl alcohol copolymer) prior to application of the lithium potassium silicate layer. An oxygen transmission rate of 61 cc/m²·day at 23°C and 60% RH was recorded. Thus, the majority of the prior art deals with primer use and pure silicate coatings. However, even then, the barrier properties are less than desired, and, in practice, values lower than 10 cc/m²·day are rarely achieved.

An interesting phenomenon was detailed in US 6071624 regarding the use of polysilicates. This describes that potassium silicate was required with lithium and sodium silicate coatings because lithium and sodium silicate coatings tend to effloresce, i.e., become covered by powdery crystalline material as a result of atmospheric exposure. In contrast, pure potassium silicate coatings do not effloresce, but suffer severe loss of barrier performance above 50% relative humidity. Pure lithium silicate coatings, on the other hand, exhibit little or no loss of barrier performance over the same relative humidity range.

JP 2003170522 A2 reported a modification to the above mentioned approach. PET (polyethylene terephthalate) films were coated with a solution of lithium silicate and sodium silicate followed by an overcoat of PVA and Li₂HPO and were then heat dried. An oxygen permeation value of 18 cc/m².day was reported at 23°C and 90% RH. A similar multilayer approach is described in JP 2002316381 A2 and JP 2002283492 A2, with an anchor coat underpinning gas barrier coatings of alkali metal silicates and top coats of PVA containing composition. As an example, PP (polypropylene) substrate was coated with an isocyanate anchor coat, followed by a coat of lithium silicate composition containing aminosilane and silane modified PVA and subsequently a final coat of PVA and clay composition. Oxygen permeation of 10.8 cc/m².day was recorded.

Thus the prior art concerning these metal silicate coatings for gas barrier predominantly focuses on pure coatings of metal silicates and additional over or undercoats for modification. The few instances where a single coat of metal silicates with polymer binder was reported used polymer solutions (e.g. polyvinyl alcohol and water soluble acrylic solutions) only, with not very successful usage of polymer emulsions in the same framework with metal silicates owing to probable obstruction in forming a homogenous film.

Use of clay in combination with the metal silicates was also reported in JP 2001260264. Biaxially oriented polypropylene substrate was coated with aminoethylated resin, followed by coating with a 50:50 blend of lithium silicate and Na+ montmorillonite to a dry film thickness of about 0,8 micron. This was thermally treated to provide a barrier film with good resistance to surface cracking. Use of montmorillonite clays in coatings with polymers has also been extensively recorded for reduction in the oxygen barrier properties, however, the permeation values were still very high when reported for systems involving polymer emulsions. WO06115729A1 reports the oxygen permeation through the coatings of polymer emulsions with microlite aluminosilicates. However, the oxygen permeation was not reduced significantly even at high filler amounts (35% of total solids). Similarly, US7119138 also had rather high permeation values even when very thick coatings and high filler amounts (50% of total solids) were employed.

US 2004/109853 A1 discloses coatings and paints comprising a biomolecule composition which includes a phosphoric triester hydrolase. The coatings and paints can be used in the decontamination of organophosphorus compounds, as well as prophylactic protection of objects from organophosphorus compounds.

WO 02/089862 A discloses air freshening compositions and articles. The articles may be packaged in a humidity resistant package for inhibiting moisture from contacting the porous carrier particles of the air freshening article.

GB 2 368 302 A discloses a multi-layer coating film-forming method which comprises coating a cationic electrodeposition coating composition containing a blocked polyisocyanate compound as a crosslinking agent to form a non-cured electrodeposition coating film, coating a water based intercoat coating composition containing a hydroxyl group and carboxyl group-containing base resin, a blocked polyisocyanate crosslinking agent, aluminum powder and a titanium oxide white pigment onto the non-cured electrodeposition coating film to form a non-cured intercoat coating film, followed by heat curing both coating films simultaneously. Oxygen permeability of the formed multi-layer coating films was not reported.

GB 2 376 905 A discloses multi-layer coating film-forming method which comprises coating a cationic electrodeposition coating composition containing a blocked polyisocyanate compound as a crosslinking agent to form a non-cured electrodeposition coating film, coating a water based intercoat coating composition containing a hydroxyl group and carboxyl group-containing base resin, a blocked polyisocyanate crosslinking agent and an alicyclic epoxy compound to form a non-cured intercoat coating film, followed by heat curing the both coating films simultaneously. Oxygen permeability of the formed multi-layer coating films was not reported.

WO 02/24759 A discloses nanocomposite compositions and process for their preparation. Specifically, the process comprises providing at least one first ethylenically unsaturated monomer; providing an aqueous clay dispersion comprising an at least partially exfoliated clay and, optionally, at least one second ethylenically unsaturated monomer, wherein said clay has a first exchangeable cation; adding a second cation to said aqueous clay dispersion, wherein at least a portion of the second cation exchanges with at least a portion of the first cation to form a modified aqueous clay dispersion; combining the first ethylenically unsaturated monomer and the modified aqueous clay dispersion; and polymerizing at least a portion of said first or second monomer to form said aqueous nanocomposite dispersion wherein at least one of the first or the second ethylenically unsaturated monomer comprises a polar monomer. The nanocomposite compositions were made into sample films of unformulated coatings and tested for the tensile properties of maximum tensile strength and percentage elongation.

WO 01/46319 A discloses a pigment dispersant for use in an anodic electrocoat composition. Specifically, the dispersant compound comprises an acrylic backbone having a plurality of pendant anionic groups and a stabilizing substituent, the stabilizing substituent comprising an alkoxyterminated polyalkylene oxide of the formula -D(CHR₁CH₂O-)ₙR₂, wherein D is a divalent radical that is -O- or -NR₃-, R₃ is hydrogen or an alkyl group of from one to twelve carbons, R₁ is hydrogen or an alkyl group of from one to eight carbons, R₂ is an alkyl group of from one to thirty carbons, and n is an integer from one to one thousand.

WO 01/44392 A discloses a cathodic electrocoat coating composition having a carbamate functional resin and a carbamate functional reactive additive. Specifically, the cathodic electrocoat comprises a polymer comprising at least one primary carbamate group and at least one cationic salting site, a curing agent having groups that are reactive with said functional groups on (A), and a reactive additive comprising at least one compound having a molecular weight of from 131 to 2000 and comprising at least one primary carbamate group and at least one alkyl group selected from the group consisting of branched alkyl groups of from 5 to 30 carbons, straight chain alkyl groups of more than 10 carbons, and mixtures thereof

WO 01/44383 A discloses electrocoat resin compositions containing carbamate functional resins having one or more quaternary ammonium groups and at least one carbamate functional reactive additive.

WO 00/47628 A discloses derivatised microfibrillar palysaccharides for use in the field of paper manufacture and treatment.

WO 00/37560A discloses anodic electrocoat coating compositions for use in anodic electrodeposition coating processes and methods of anodic electrodeposition.

US 4 737 525 A discloses processes for the production of thixotropic silicates and stable organic-silicate emulsions. Specifically, the thixotropic silicates and stable emulsions are produced by reacting a salt-forming compound such as mineral acids and a powdered natural silicate in a liquid organic compound. The thixotropic silicates, such as minerals containing silicates, may be utilized to produce stable organic compound-silicate emulsion, as an anti-sag material, as a filler and as a thickener. It is also disclosed that the thixotropic silicate may be further chemically reacted along with the organic compound to produce useful foams, resins, coating agents and fillers.

GB 1 151 531 A discloses aqueous coating compositions which can be applied to both porous and non-porous surfaces to form an adherent coating. It would be desirable to be able to use polymer emulsions instead of polymer solutions, since this would increase considerably the range of materials which can be used. Thus, many polymers can only be made into emulsions and not solutions, and often solutions are less stable than emulsions to pH changes. However, we are not aware of any previous successful use of a combination of a metal silicate, a polymer emulsion and the aluminosilicate clays in the prior art. Indeed, when we have attempted to use polymer emulsions to replace polymer solutions in otherwise successful compositions, the resulting compositions have invariably had poor oxygen barrier properties. We have now surprisingly found that polymer emulsions may be used, provided that the compositions adhere to certain specific ranges of proportions of the respective components.

Thus, the present invention consists in an oxygen barrier coating composition comprising: a water-soluble alkali metal silicate; a clay mineral; and an emulsion of film-forming polymer; wherein said composition contains solids of which 88 to 92% by weight of the total solids in the composition is water-soluble alkali metal silicate, 4 to 6% by weight of the total solids in the composition is clay mineral, and 4 to 6% by weight of the total solids in the composition is film-forming polymer.

More preferably, the amount of silicate is about 90% of total solids. Correspondingly, the amounts of clay mineral and polymer are each preferably about 5% of total solids. The overall solids content of the composition is preferably from 1 to 20% by weight, more preferably from 7 to 15% by weight and most preferably about 10% by weight.

The metal silicate employed is a water-soluble alkali metal silicate or polysilicate, such as lithium silicate, sodium silicate or potassium silicate. Commercially available silicates generally have a molar ratio of alkali metal oxide:silicon dioxide that varies, in some instances quite considerably, from the stoichiometric. This molar ratio can affect the properties of the silicate to a large extent and thus may affect the properties of the gas barrier coating of the present invention. Although the optimum molar ratio for any particular composition may be found by the person skilled in the art by simple experiment, in general, we prefer that the molar ratio of alkali metal oxide:silicon dioxide should be from 0.1:1 to 0.4:1, more preferably from 0.2:1 to 0.3:1 and most preferably around 0.25:1.

The other essential component of the composition of the present invention is a polymer emulsion, preferably an aqueous emulsion. The polymer is a film-forming polymer. Examples of suitable polymers include: acrylic polymers (i.e. polymers of an acrylate or methacrylate, such as polymethyl acrylate, polymethyl methacrylate, polyethyl acrylate, polyethyl methacrylate, polypropyl acrylate, polypropyl methacrylate), copolymers of two or more acrylates and/or methacrylates (such as ethyl hexyl acrylate-co-methyl methacrylate), copolymers of one or more ethylenically unsaturated hydrocarbons, such as styrene, with one or more hydrocarbyl, e.g. alkyl, acrylates (for example styrene-co-methyl methacrylate, styrene-co-butyl acrylate, styrene-co-methyl acrylate, and styrene-co-ethyl hexyl acrylate), polyethylene wax, polyethylene-paraffin wax, polyurethane, polyurethane urea hybrids, polyurethane acrylic hybrids, vinyl acetate-co-vinyl versatate and styrene-co-butadiene hybrids.

The clay mineral used is preferably nanoparticulate. Also preferably a portion of the clay mineral has been intercalated or exfoliated during the dispersion process. There is no restriction on the type of clay mineral used in this invention provided that it is sufficiently dispersible in an aqueous medium and that it is capable of being intercalated or exfoliated during dispersion. In an exfoliated form the aspect ratio of the clay mineral (i.e. the ratio between the length and thickness of a single clay 'sheet') will have an impact on the level of oxygen barrier achieved. The greater the aspect ratio, the more the rate of oxygen diffusion through the dry coating and laminate will be reduced. Clay minerals with aspect ratios between 20 and 10,000 are preferably used. Particularly preferred are those minerals having an aspect ratio greater than 100. Examples of suitable clays include aluminosilicate clays, especially kaolinite, montmorillonite, atapulgite, illite, bentonite, halloysite, kaolin, mica, diatomaceous earth and fuller's earth, calcined aluminium silicate, hydrated aluminium silicate, magnesium aluminium silicate, sodium silicate and magnesium silicate. Commercial examples of suitable materials are Cloisite Na+ (available from Southern Clay), Bentone ND (available from Elementis). Of these, the clays are preferred, nanoparticulate clays being most preferred.

If desired, other polymers or resins may be included in the coating composition, provided these co-resins are themselves compatible in the final composition. Examples of such polymers and resins include solution acrylics, acrylic emulsions, polyesters, alkyds, sulphopolyesters, polyurethanes, vinyl acetate emulsions, poly(vinyl butyral), poly(vinyl pyrrolidone), poly(ethylene imine), polyamides, polysaccharides, proteins, epoxies, etc. It is also possible to include sol-gel precursors in these compositions, e.g. a hydrolysate of tetraethyl orthosilicate.

The coating composition of the present invention is usually and preferably applied in the form of a mixture of the silicate, the clay mineral and the polymer emulsion in a suitable solvent. The solvent is preferably aqueous, and is more preferably water, alone or optionally containing a small quantity of a miscible co-solvent, such as an alcohol (for example ethanol, n-propanol or isopropanol) or a ketone (such as acetone). Where a co-solvent is present, this is preferably no more than 10% by weight of the entire composition, still more preferably no more than 5%. The preferred co-solvent is an alcohol, preferably ethanol.

The coating composition of the present invention comprising the silicate, the clay, the polymer emulsion and a solvent or dispersant may be applied to a substrate by any conventional means. The solvent or dispersant may then be removed, e.g. by heating, leaving a film comprising the silicate dispersed through the polymer on the substrate.

There is no particular restriction on the nature of the substrate, which may be a rigid or flexible plastic, or, indeed, any other material suitable for the intended use. However, where the matter being packaged is a foodstuff or pharmaceutical, it will normally be preferred that the plastics film or other substrate should be food grade. Examples of suitable materials include: polyolefins, such as polyethylene or polypropylene; polyesters, such as polyethylene terephthalate, polybutylene terephthalate or polyethylene naphthenate; polyamides, such as nylon-6 or nylon-66; and other polymers, such as polyvinyl chloride, polyimides, acrylic polymers, polystyrenes, celluloses, or polyvinylidene chloride. It is also possible to use copolymers of any compatible two or more of the monomers used to produce these polymers.

If a flexible substrate is coated with a gas barrier coating, it may be used on its own as a single ply film, or it may form part of a more complex laminate structure which can include one or more additional substrates, adhesive coatings, layers of inks and varnishes, etc., as is well known to those skilled in the art.

The thickness of the coating of the present invention will depend in part on the ability of the silicate to form a continuous, coherent coating layer. However, in general, we prefer that the coating should be from 50 nm to 3000 nm thick, more preferably from 200 to 2000 nm thick.

The invention thus also provides a process for forming a gas barrier film, which comprises applying to a substrate a composition according to the present invention in a solvent or dispersant, and removing the solvent or dispersant.

The invention still further provides a packaged foodstuff, pharmaceutical or other material sensitive to the atmosphere, wherein the packaging comprises a gas barrier coating of the present invention.

The present invention is further illustrated by the following non-limiting Examples, in which the emulsions used are water-based.

### EXAMPLES 1 TO 13 [(a)-(c)]

Oxygen transmission values (cc/m².day) of the coatings drawn on PET substrates with a 2K bar at 10 wt% of total solids with formulations: emulsion/clay, lithium silicate/emulsion and lithium silicate/clay/emulsion are shown in parallel for comparison with each other (measured at 50% RH and 23°C).

The clay used was a refined aluminosilicate montmorillonite from Southern Clay under the trade name of Cloisite Na+. It has a cation exchange capacity of 880 micro equivalents/ g and has a high aspect ratio when fully exfoliated.

The weight ratios of the components in the columns represent optimum values. The column (a) denotes the formulations with emulsion to clay solid weight ratio of 9:1. Further increasing the amount of clay had no influence on the permeation properties. The column (b) represents the formulations with metal silicate to emulsion weight ratios of 9:1. Increasing the amount of emulsion from 10% in the formulation deteriorated the permeation properties. The formulations in column (c) have components metal silicate, emulsion and clay in the weight ratio of 9:0.5:0.5. The formulations at these weight ratios provided the best barrier (see Examples 25-30). The results are shown in Table 1.

**Table 1**

| Example | | (a) | (b) | (c) |
|---|---|---|---|---|
| | Emulsion | Emulsion/ clay (9:1 by wt.) | Li silicate/ emulsion (9:1 by wt.) | Li silicate/ emulsion/ clay (9:0.5:0.5 by wt.) |
| 1 | Joncryl DFC 3040 E | 101 | 45.5 | 1.4 |
| 2 | Joncryl 617 | 100 | 20.5 | 3.5 |
| 3 | Joncryl 74 | 101 | 9.0 | 3.1 |
| 4 | Joncryl 1665 | 102 | 9.9 | 5.1 |
| 5 | Jonwax 120 | 98 | 88.0 | 23.9 |
| 6 | Jonwax 35 | 105 | 84.0 | 19.3 |
| 7 | Joncryl U4188 | 108 | 66.3 | 4.4 |
| 8 | Joncryl U6333 | 99 | 2.2 | 0.8 |
| 9 | Synthomer Emu 523 | 98 | 6.7 | 1.3 |
| 10 | Synthmer Rev 211 | 104 | 57.0 | 7.1 |
| 11 | Noveon Stycar 0738 | 108 | 14.3 | 0.9 |
| 12 | Joncryl SCX 1630 | 97 | 55.0 | 3.0 |
| 13 | DSM Neocryl A 2092 | 98 | 70.0 | 3.1 |

| | | | | |
|---|---|---|---|---|
| Notes: (1) Joncryl DFC 3040 E, Joncryl 1665 and Joncryl SCX 1630 are acrylic copolymer emulsions from Johnson Polymer. (2) Joncryl 617 and Joncryl 74 are acrylic polymer emulsions from Johnson Polymer. (3) Jonwax 120 is a polyethylene-paraffin wax emulsion, whereas Jonwax 35 is a polyethylene wax emulsion from Johnson Polymer. (4) Joncryl U4188 and Joncryl U6333 are polyurethane and polyurethane/acrylic hybrid emulsions respectively procured from Johnson Polymer. (5) Synthomer Emultex 523 ("Synthomer Emu 523") and Synthomer Revacryl 211 ("Synthomer Rev 211") are vinyl acetate-co-vinyl versatate and 2-ethylhexyl acrylate-co-methyl methacrylate dispersions from Synthomer. (6) Noveon Stycar 0738 is a styrene butadiene emulsion procured from Noveon. (7) DSM Neocryl A 2092 is a styrene acrylic copolymer emulsion from DSM Neoresins. | | | | |

### EXAMPLES 14 TO 24 [(a)-(c)]

Oxygen transmission values (cc/m².day) of the coatings drawn on PET substrates with a 2K bar at 10 wt% of total solids with formulations: emulsion/clay, sodium silicate/emulsion and sodium silicate/clay/emulsion are shown in parallel for comparison with each other (measured at 50% RH and 23°C). The results are shown in Table 2.

**Table 2**

| Example | | (a) | (b) | (c) |
|---|---|---|---|---|
| | Emulsion | Emulsion/ clay (9:1 by wt.) | Na silicate/ emulsion (9:1 by wt.) | Na silicate/ emulsion/ clay (9:0.5:0.5 by wt.) |
| 14 | Joncryl DFC 3040 E | 101 | 21.4 | 4.2 |
| 15 | Joncryl 617 | 100 | 40.1 | 2.1 |
| 16 | Joncryl 74 | 101 | 27.7 | 2.7 |
| 17 | Joncryl 1665 | 102 | 88.8 | 15.6 |
| 18 | Jonwax 120 | 98 | 83.3 | 77.4 |
| 19 | Jonwax 35 | 105 | 48.3 | 33.3 |
| 20 | Joncryl U4188 | 108 | 84.2 | 32.9 |
| 21 | Joncryl U6333 | 99 | 33.1 | 10.0 |
| 22 | Synthomer Emu 523 | 98 | 38.3 | 13.0 |
| 23 | Synthomer Rev 211 | 104 | 52.3 | 8.4 |
| 24 | Novean Stycar 0738 | 108 | 15.0 | 12.4 |

### EXAMPLES 25 TO 30 [(a)-(b)]

In these Examples, we compared the oxygen transmission (cc/m².day) through the coatings as a function of the weight fraction of Li silicate/emulsion/clay with respect to each other. The results are shown in Table 3.

**Table 3**

| Example | | (a) | (b) |
|---|---|---|---|
| | Emulsion | Li silicate/ emulsion/ clay (9:0.5:0.5 by wt.) | Li silicate/ emulsion/ clay (8:1:1 by wt.) |
| 25 | Joncryl DFC 3040 E | 1.4 | 16.8 |
| 26 | Joncryl 617 | 3.5 | 11.7 |
| 27 | Joncryl U4188 | 4.4 | 9.5 |
| 28 | Joncryl U6333 | 0.8 | 4.4 |
| 29 | Synthomer Emu 523 | 1.3 | 36.8 |
| 30 | Noveon Stycar 0738 | 0.9 | 17.5 |

### EXAMPLES 31 TO 34

Oxygen transmission values (cc/m².day) of the coatings drawn on PP and PLA (polylactic acid) substrates with a 2K bar at 10 wt% of total solids with formulation lithium silicate/clay/emulsion (weight ratio of 9:0.5:0.5, measured at 50% RH and 23°C) were measured and the results are reported in Table 4.

**Table 4**

| Example | Emulsion | PP (opaque substrate) | PP (transparent substrate) | PLA |
|---|---|---|---|---|
| 31 | Joncryl DFC 3040 E | 9.7 | 18.3 | 5.6 |
| 32 | Joncryl 617 | 11.1 | 15.12 | 5.7 |
| 33 | Joncryl 74 | 29.7 | 28.5 | 9.9 |
| 34 | Joncryl 1665 | 154.6 | 146.8 | 47.4 |

### EXAMPLES 35 TO 44

Oxygen transmission and bond strength values of the laminates prepared with the following specifications: Lithium Silicate:Joncryl DFC 3040E:Clay = 9:0.5:0.5. 10 wt% solids, 2K bar are shown in Table 5.

**Table 5**

| Example | Laminate | Oxygen transmission cc/m².day | %RH | Bond strength N |
|---|---|---|---|---|
| 35 | PET/Barrier/OPP | 1.8 (91)** | 50 | 2.4 |
| 36 | PET/Barrier/PE | 2.5 (98)** | 50 | 2.8 |
| 37 | OPA/Barrier/OPP | 1.0 (27)** | 50 | 1.3 |
| 38 | OPA/Barrier/PE | 3.0 (28)** | 50 | 0.5 |
| 39 | PET/Barrier/OPP* | 1.2 (91)** | 50 | 2.7 |
| 40 | PET/Barrier/PE | 2.7 (98)** | 50 | 2.6 |
| 41 | OPA/Barrier/OPP* | 1.4 (27)** | 50 | 1.1 |
| 42 | PET/Barrier/OPP | 6.5 | 80 | 2.4 |
| 43 | PET/Barrier/PE | 13.5 | 80 | 2.8 |
| 44 | OPA/Barrier/OPP | 3.3 | 80 | 1.3 |

| | | | | |
|---|---|---|---|---|
| Note: * the laminate structures 39-41 were produced in a similar fashion to laminate structures 35-37, but by using formulations which had been allowed to age for a month, in order to analyze the effect of shelf storage on the permeation and bond strength of the laminates. Note: ** the oxygen transmission values in brackets are for blank laminates i.e., without the barrier layer. | | | | |

## Claims

1. An oxygen barrier coating composition comprising: a water-soluble alkali metal silicate; a clay mineral; and an emulsion of film-forming polymer; wherein said composition contains solids of which 88 to 92% by weight of the total solids in the composition is water-soluble alkali metal silicate, 4 to 6% by weight of the total solids in the composition is clay mineral, and 4 to 6% by weight of the total solids in the composition is film-forming polymer.

2. A composition according to Claim 1, in which the amount of water-soluble alkali metal silicate is about 90% of total solids.

3. A composition according to Claim 1 or 2, in which the amounts of clay mineral and film-forming polymer are each about 5% of total solids.

4. A composition according to any one of the preceding Claims, in which the overall solids content of the composition is from 1 to 20% by weight.

5. A composition according to Claim 4, in which the overall solids content of the composition is about 10% by weight.

6. A composition according to Claim 1, in which the water-soluble alkali metal silicate is sodium silicate, potassium silicate or lithium silicate.

7. A composition according to Claim 1, in which the molar ratio of alkali metal oxide:silicon dioxide is from 0.1:1 to 0.4:1.

8. A composition according to Claim 7, in which the molar ratio is from 0.2:1 to 0.3:1, preferably around 0.25:1.

9. A composition according to any one of the preceding Claims, in which the film-forming polymer is: an acrylic polymer; a copolymer of two or more acrylates and/or methacrylates; a copolymer of one or more ethylenically unsaturated hydrocarbons with one or more alkyl acrylates; a polyethylene wax; a polyethylene-paraffin wax; a polyurethane; a polyurethane urea hybrid; a polyurethane acrylic hybrid; a vinyl acetate-co-vinyl versatate; or a styrene-co-butadiene hybrid.

10. A process for forming a gas barrier films, which comprises applying to a substrate a composition according to any one of the preceding Claims in a solvent or dispersant, and removing the solvent or dispersant.

11. A packaged foodstuff, pharmaceutical or other material sensitive to the atmosphere, wherein the packaging comprises a gas barrier coating according to any one of Claims 1 to 9 on a substrate.

## Patentansprüche

1. Sauerstoffbarriere-Beschichtungszusammensetzung umfassend: ein wasserlösliches Alkalimetallsilicat, ein Tonmineral und eine Emulsion von filmbildendem Polymer, wobei die Zusammensetzung Feststoffe enthält, wovon 88 bis 92 Gew.-% der gesamten Feststoffe in der Zusammensetzung aus wasserlöslichem Alkalimetallsilicat bestehen, 4 bis 6 Gew.-% der gesamten Feststoffe in der Zusammensetzung aus Tonmineral bestehen und 4 bis 6 Gew.-% der gesamten Feststoffe in der Zusammensetzung aus filmbildenem Polymer bestehen.

2. Zusammensetzung nach Anspruch 1, wobei die Menge an wasserlöslichem Alkalimetallsilicat etwa 90 % der gesamten Feststoffe beträgt.

3. Zusammensetzung nach Anspruch 1 oder 2, wobei die Mengen an Tonmineral und filmbildendem Polymer jeweils etwa 5 % der gesamten Feststoffe beträgt.

4. Zusammensetzung nach einem der vorhergehenden Ansprüche, wobei der gesamte Feststoffgehalt der Zusammensetzung 1 bis 20 Gew.-% beträgt.

5. Zusammensetzung nach Anspruch 4, wobei der gesamte Feststoffgehalt der Zusammensetzung etwa 10 Gew.-% beträgt.

6. Zusammensetzung nach Anspruch 1, wobei das wasserlösliche Alkalimetallsilicat Natriumsilicat, Kaliumsilicat oder Lithiumsilicat ist.

7. Zusammensetzung nach Anspruch 1, wobei das Molverhältnis von Alkalimetalloxid:Siliciumdioxid 0,1:1 1 bis 0,25:1 beträgt.

8. Zusammensetzung nach Anspruch 7, wobei das Molverhältnis 0,2:1 bis 0,3:1, bevorzugt etwa 0,25:1 beträgt.

9. Zusammensetzung nach einem der vorhergehenden Ansprüche, wobei das filmbildende Polymer Folgendes ist: ein Acrylpolymer, ein Copolymer von zwei oder mehreren Acrylaten und/oder Methacrylaten, ein Copolymer eines oder mehrerer ethylenisch ungesättigter Kohlenwasserstoffe mit einem oder mehreren Alkylacrylaten, ein Polyethylenwachs, ein Polyethylen-Paraffinwachs, ein Polyurethan, ein Polyurethan-Harnstoffhybrid, ein Polyurethan-Acrylhybrid, ein Vinylacetat-co-vinylversatat oder ein Styrol-co-butadienhybrid.

10. Verfahren zum Bilden eines Gasbarrierefilms, das das Aufbringen, auf ein Substrat, einer Zusammensetzung nach einem der vorhergehenden Ansprüche in einem Lösungsmittel oder Dispersionsmittel und das Entfernen des Lösungsmittels oder Dispersionsmittels umfasst.

11. Verpacktes Nahrungsmittel, Pharmazeutikum oder anderes Material, das gegen die Atmosphäre empfindlich ist, wobei die Verpackung eine Gasbarrierebeschichtung nach einem der Ansprüche 1 bis 9 auf einem Substrat umfasst.

## Revendications

1. Composition de revêtement formant barrière à l'oxygène comprenant un silicate de métal alcalin soluble dans l'eau ; un minéral argileux ; et une émulsion de polymère formant film ; dans laquelle ladite composition contient des matières solides dont 88 à 92 % en poids des matières solides totales dans la composition représentent du silicate de métal alcalin soluble dans l'eau, 4 à 6 % en poids des matières solides totales dans la composition représentent un minéral argileux, et 4 à 6 % en poids des matières solides totales dans la composition sont un polymère formant film.

2. Composition selon la revendication 1, dans laquelle la quantité de silicate de métal alcalin soluble dans l'eau représente environ 90 % des matières solides totales.

3. Composition selon la revendication 1 ou 2, dans laquelle les quantités de minéral argileux et de polymère formant film représentent chacune environ 5 % des matières solides totales.

4. Composition selon l'une quelconque des revendications précédentes, dans laquelle la teneur totale en matières solides de la composition est de 1 à 20 % en poids.

5. Composition selon la revendication 4, dans laquelle la teneur totale en matières solides de la composition est environ 10 % en poids.

6. Composition selon la revendication 1, dans laquelle le silicate de métal alcalin soluble dans l'eau est le silicate de sodium, le silicate de potassium ou le silicate de lithium.

7. Composition selon la revendication 1, dans laquelle le rapport molaire de l'oxyde de métal alcalin:dioxyde de silicium est de 0,1:1 à 0,4:1.

8. Composition selon la revendication 7, dans laquelle le rapport molaire est de 0,2:1 à 0,3:1, de préférence autour de 0,25:1.

9. Composition selon l'une quelconque des revendications précédentes, dans laquelle le polymère formant film est : un polymère acrylique ; un copolymère de deux ou plusieurs acrylates et/ou méthacrylates ; un copolymère d'un ou plusieurs hydrocarbure(s) éthyléniquement insaturé(s) avec un ou plusieurs acrylate(s) d'alkyle ; une cire de polyéthylène ; une cire de polyéthylène-paraffine ; un polyuréthane ; un hybride de polyuréthane urée ; un hybride de polyuréthane acrylique ; un acétate de vinyle-*co-*versatate de vinyle ; ou un hybride de styrène-*co*-butadiène.

10. Procédé de formation d'un film formant barrière au gaz, qui comprend l'application à un substrat d'une composition selon l'une quelconque des revendications précédentes dans un solvant ou un agent de dispersion, et l'élimination du solvant ou du dispersant.

11. Substance alimentaire, matériau pharmaceutique ou autre matériau conditionné sensible à l'atmosphère, dans laquelle (lequel) le conditionnement comprend un revêtement formant barrière au gaz selon l'une quelconque des revendications 1 à 9 sur un substrat.
